# EUROPÄISCHE PATENTSCHRIFT

(11) **EP 3 230 095 B1**
(45) Veröffentlichungstag und Bekanntmachung des Hinweises auf die Patenterteilung: **06.03.2019**
(21) Anmeldenummer: 15801868.9
(22) Anmeldetag: 01.12.2015
(51) Int. Cl.: B60G 3/20, B60G 7/00, B62D 7/18

(54) **LENKERSYSTEM**
CONTROL ARM SYSTEM
SYSTÈME DE BRAS DE SUSPENSION

(30) Priorität: 11.12.2014 DE 102014225601
(43) Veröffentlichungstag der Anmeldung: 18.10.2017
(73) Patentinhaber: ZF Friedrichshafen AG, 88046 Friedrichshafen (DE)
(72) Erfinder: BAASCH, Detlef, 88094 Oberteuringen (DE); KNOLL, Andreas, 88214 Ravensburg (DE); BODENSTAB, Robert, 87439 Kempten (DE)
(86) Internationale Anmeldenummer: PCT/EP2015/078116
(87) Internationale Veröffentlichungsnummer: WO 2016/091641

(56) Entgegenhaltungen:
- DE-A1- 10 329 689
- DE-A1-102008 044 103

## Beschreibung

Die vorliegende Erfindung betrifft ein Lenkersystem für eine Radaufhängung einer Achsanordnung eines Fahrzeugs mit den oberbegrifflichen Merkmalen nach Anspruch 1.

Bei herkömmlichen Vorderachsen, beispielsweise in Doppelquerlenkerausführung oder in McPherson-Ausführung, werden die Räder der Vorderachse mittels Querlenkern geführt. Die unteren Querlenker stützen sich an der Karosserie ab und übertragen die bei einem Fahrbetrieb des Fahrzeugs auftretenden Längs- und Querkräfte. Beim Lenken des Fahrzeugs in eine Kurve entsteht ein Lenkwinkel. Dieser ist auf Grund der Konstruktion der Achsanordnung auf einen gewissen Maximalwinkel begrenzt, üblich sind beispielsweise 50°.

Aus der DE 10329689 A1 ist eine Achsaufhängung für Kraftfahrzeuge bekannt. Diese Achsaufhängung weist Quer- oder Längslenker auf, die um das Rad herum gekrümmt sind. Mit ihren freien Enden sind sie mit dem Seitenbereich des Fahrzeugs verbunden. Die Krümmung ist so ausgestaltet, dass ein ungehinderter Radeinschlag erfolgen kann. Die Krümmung der Querlenker bestimmt sich dabei aus einer Funktion des Radeinschlags der Räder.

Aus der DE 3800235 A1 ist eine Vorrichtung zur Aufhängung und Lenkung eines Landfahrzeugleitrades bekannt. Diese Vorrichtung weist zwei Arme auf, die an einer Seite mit Achszapfenträgern und an der anderen Seite mit der Fahrzeugkarosserie verbunden sind. Diese Arme können entweder geradlinig oder um das Rad herum gebogen ausgestaltet sein.

Der vorliegenden Erfindung liegt ausgehend vom Stand der Technik die Aufgabe zu Grunde, ein verbessertes Lenkersystem für eine Radaufhängung einer Achsanordnung eines Fahrzeugs mit einer Querlenkeranordnung, mit einem Radträger und mit einem Rad vorzuschlagen, das es ermöglicht Lenkwinkel der Räder von wenigstens 90° zu erreichen ohne eine Kollision der Räder, d. h. der Reifen inklusive der Felgen, mit den Querlenkern zu verursachen, so dass eine Wendigkeit des Fahrzeugs deutlich erhöht wird. Das Schwenken des Rades soll sowohl nach links als auch nach rechts erfolgen, d. h. ein Lenkwinkel von wenigstens 90° nach einer Seite und ebenfalls von wenigstens 90° nach der anderen Seite soll ermöglicht werden. Das Lenkersystem mit der Querlenkeranordnung soll sowohl in Achsanordnungen in Doppelquerlenkerausführung als auch in Achsanordnungen in McPherson-Ausführung einsetzbar sein.

Die vorliegende Erfindung schlägt ausgehend von der vorgenannten Aufgabe ein Lenkersystem für eine Radaufhängung einer Achsanordnung eines Fahrzeugs mit den Merkmalen nach Patentanspruch 1 vor. Weitere vorteilhafte Ausgestaltungen und Weiterbildungen gehen aus den Unteransprüchen hervor.

Ein Lenkersystem für eine Radaufhängung einer Achsanordnung eines Fahrzeugs weist eine Querlenkeranordnung, einen Radträger und einen Rad auf. Die Querlenkeranordnung weist zwei gleichförmig ausgeformte einfach bogenförmige Querlenkerstreben auf, von welchen jede einen radträgerseitigen Abschnitt und einen karosserieseitigen Abschnitt aufweist. Jeder radträgerseitige Abschnitt weist ein Drehgelenk auf und jeder karosserieseitige Abschnitt weist ein weiteres Drehgelenk auf. Die Bogenform jeder Querlenkerstrebe weist ein Extremum auf, welches näher an dem radträgerseitigen Abschnitt angeordnet ist als an dem karosserieseitigen Abschnitt.

Unter einer einfachen Bogenform ist hierbei eine Kontur der Querlenkerstrebe zu verstehen, die in Form eines Bogens mit einem in Richtung des radträgerseitigen Abschnitts verschobenen Extremum ist. Die Bogenform weist hierbei keine weiteren Sattelpunkte, Extrema auf. Der radträgerseitige Abschnitt der Querlenkerstrebe begrenzt die Querlenkerstrebe zu einer ersten Seite hin, d. h. der radträgerseitige Abschnitt der Querlenkerstrebe formt ein erstes Ende der Querlenkerstrebe aus. Der karosserieseitige Abschnitt der Querlenkerstrebe begrenzt die Querlenkerstrebe zu einer zweiten Seite hin, d. h. der karosserieseitige Abschnitt der Querlenkerstrebe formt ein zweites Ende der Querlenkerstrebe aus. Hierbei dient die Nummerierung der Enden der Querlenkerstrebe nur der einfacheren Unterscheidung und trifft keine Aussage über eine Vorrangigkeit. Die Querlenkerstrebe ist in anderen Worten derart ausgeformt, dass der Bogen von dem ersten Ende zu dem zweiten Ende verläuft und auf dieser so festgelegten Strecke an einer gewissen Position ein Extremum liegt. Das Extremum ist näher an dem radträgerseitigen Abschnitt der Querlenkerstrebe angeordnet als an dem karosserieseitigen Abschnitt.

Der karosserieseitige Abschnitt der Querlenkerstrebe ist hierbei derjenige Abschnitt der Querlenkerstrebe, der sich in einer vollständigen, d. h. fertiggestellten Achsanordnung an einer Karosserie abstützt, d. h. mit der Karosserie über eine Verbindungsstelle verbunden ist. Diese Verbindungsstelle ist durch ein weiteres Drehgelenk ausgeformt. Dementsprechend ist der radträgerseitige Abschnitt der Querlenkerstrebe derjenige Abschnitt der Querlenkerstrebe, der sich in einer vollständigen, d. h. fertiggestellten Achsanordnung an einem Radträger abstützt, d. h. mit dem Radträger über eine Verbindungsstelle verbunden ist. Diese Verbindungsstelle ist durch ein Drehgelenk ausgeformt.

Ein Drehgelenk ist hierbei ein Gelenk, welches eine Drehbewegung um dasselbe ermöglicht. Hierbei wird die Rotation um einen Mittelpunkt des Drehgelenks durchgeführt, wobei das zu drehende Bauelement, hier die Querlenkerstrebe, bei dieser Rotation immer in derselben Ebene verbleibt. In anderen Worten bleibt das Extremum jeder Querlenkerstrebe bei dieser Drehbewegung immer in derselben horizontalen Ebene und bewegt sich nur weiter auf das Rad des Lenkersystems zu oder von diesem weg. Eine Rotationsachse der Drehgelenke, um welche sich die Querlenkerstrebe dreht, ist also senkrecht zu der Ebene, in welcher die Querlenkerstrebe angeordnet ist, und in einer vollständigen Achsanordnung senkrecht zu einer Fahrbahn. An dem radträgerseitigen Abschnitt jeder Querlenkerstrebe ist ein Drehgelenk angeordnet, d. h. das Drehgelenk ist direkt mit dem radträgerseitigen Abschnitt der Querlenkerstrebe verbunden. Direkt verbunden heißt hierbei, dass zwischen den beiden direkt verbundenen Bauelementen keine weiteren Bauelemente angeordnet sind, die mit diesen verbunden sind. Die eine der zwei Querlenkerstreben weist also einen radträgerseitigen Abschnitt auf, der mit ihrem Drehgelenk direkt verbunden ist. Die andere der zwei Querlenkerstreben weist also einen radträgerseitigen Abschnitt auf, der mit ihrem Drehgelenk direkt verbunden ist.

An dem karosserieseitigen Abschnitt jeder Querlenkerstrebe ist das weitere Drehgelenk angeordnet, d. h. das weitere Drehgelenk ist direkt mit dem karosserieseitigen Abschnitt der jeder Querlenkerstrebe verbunden. Die eine der zwei Querlenkerstreben weist also einen karosserieseitigen Abschnitt auf, der mit ihrem weiteren Drehgelenk direkt verbunden ist. Die andere der zwei Querlenkerstreben weist also einen karosserieseitigen Abschnitt auf, der mit ihrem weiteren Drehgelenk direkt verbunden ist. Das Drehgelenk und das weitere Drehgelenk können beispielsweise als Gleitlager, Kugellager, Nadellager oder Kugelkopf ausgeformt sein. Die Drehgelenke dienen hierbei ebenfalls zum Einleiten der Kräfte von dem Radträger in die Querlenkerstreben. Die beiden Querlenkerstreben formen radträgerseitig einen aufgelösten Dreiecksquerlenker aus.

Eine erste der zwei Querlenkerstreben ist näher an einer Raddrehachse des Rades des Lenkersystems angeordnet als eine zweite der zwei Querlenkerstreben. Dies heißt, das der Radträger zwei Verbindungsstellen aufweist, wobei eine dieser Verbindungsstellen näher an der Raddrehachse, d. h. an der Radmitte angeordnet ist, als die andere dieser Verbindungsstellen. Diese beabstandete Anordnung der Querlenkerstreben führt dazu, dass diese bei einer Drehbewegung einer oder beider Querlenkerstreben nicht kollidieren und ungehindert drehen können. Trotz dieser beabstandeten Anordnung wird eine Aufnahme der Längs- und Querkräfte durch die Querlenkerstreben nicht negativ beeinflusst. Die Raddrehachse der Räder ist durch die Rotationsmittelpunkte, d. h. die Radmitte der Räder festgelegt. Es handelt sich um diejenige Achse, um welche die Räder bei einer Fahrbewegung des Rades rotieren.

Die Bogenform ist derart gestaltet, dass bei einem Drehen der einen der zwei Querlenkerstreben um eine Rotationsachse ein konvexer Bereich dieser Querlenkerstrebe innerhalb der Felge des Rades anordenbar ist, welches mit demselben Radträger verbunden ist wie beide Querlenkerstreben. In anderen Worten ist die Querlenkerstrebe derart gebogen, dass diese mit ihrem konvex gekrümmten Bereich in die Felge hineingedreht werden kann, ohne mit der Felge oder dem Reifen des Rades zu kollidieren. Die Bogenform ist des Weiteren derart gestaltet, dass bei einem Drehen der anderen der zwei Querlenkerstreben um eine Rotationsachse ein konkaver Bereich dieser Querlenkerstrebe um das Rad herumführbar ist, welches mit demselben Radträger verbunden ist wie beide Querlenkerstreben. Jede Querlenkerstrebe ist hierbei derart ausgeformt, dass sie eben verläuft, d. h. diese Querlenkerstreben liegen in einer planen Ebene und sind nur in eine Richtung gebogen. Durch die gleichförmige Ausgestaltung beider Querlenkerstreben kann jede Querlenkerstrebe sowohl um das Rad herumgeführt als auch in die Felge des Rades hineingedreht werden.

Wird für die Räder eines Fahrzeugs, welches das Lenkersystem aufweist, durch beispielsweise eine Kurvenfahrt des Fahrzeugs ein Lenkwinkel der Räder benötigt, welcher derart groß ist, dass sich bei undrehbaren Querlenkerstreben eine Kollision der Räder mit den Querlenkerstreben ergeben würde, werden die Querlenkerstreben um wenigstens eine ihrer Rotationsachsen, welche senkrecht zu einer Fahrbahn sind, bedarfsgerecht gedreht. Bei einem Lenkwinkel von beispielsweise 90° weichen die Querlenkerstreben derart aus, dass die dem geschwenkten Rad am nächsten liegende Querlenkerstrebe so weit gedreht wird, dass eine Kollision mit dem Rad vermieden wird. Die andere Querlenkerstrebe wird ebenfalls so weit gedreht, dass eine Kollision mit dem geschenkten Rad vermieden wird. Die Querlenkerstreben weichen dem Rad, das mit demselben Radträger verbunden ist wie die Querlenkerstreben selbst, kontinuierlich aus. D. h. je größer der Lenkwinkel dieses Rades wird, desto weiter werden die Querlenkerstreben gedreht. Somit lassen sich maximale Lenkwinkel des Rades des Lenksystems von wenigstens 90° realisieren, die weit über dem Durchschnitt von 50° liegen. Hierbei kann das Rad sowohl wenigstens 90° nach links als auch wenigstens 90° nach rechts geschwenkt werden. Dies erhöht eine Wendigkeit des Fahrzeugs. Die Querlenkeranordnung ist vorzugsweise eine untere Querlenkeranordnung.

Nach einer ersten Ausführungsform weist jede Querlenkerstrebe ausgehend von ihrem jeweiligen Extremum einen kurzen Schenkel und einen langen Schenkel auf, wobei die Steigung des langen Schenkels geringer ist als die des kurzen Schenkels, und der kurze Schenkel sowohl durch den radträgerseitigen Abschnitt als auch durch das Extremum begrenzt wird, sowie der lange Schenkel sowohl durch den karosserieseitigen Abschnitt als auch durch das Extremum begrenzt wird. Der lange Schenkel ist hierbei beispielsweise wenigstens doppelt so lang wie der kurze Schenkel. Die Länge des kurzen und des langen Schenkels wird sowohl durch die Ausformung des Rades, das mit demselben Radträger verbunden ist wie die die Querlenkerstreben, als auch durch die zu realisierenden Lenkwinkel dieses Rades bestimmt.

Es ergibt sich ein virtueller Drehpunkt des Rades, das mit demselben Radträger verbunden ist wie die Querlenkerstreben, durch einen virtuellen Schnittpunkt der Querlenkerstreben. Dieser Schnittpunkt ist der Schnittpunkt der beiden Querlenkerstrebenlinien miteinander. Eine Querlenkerstrebenlinie wird festgelegt durch die beiden Drehgelenke einer jeden Querlenkerstrebe, d. h. die Verbindungslinie des Drehgelenks einer Querlenkerstrebe mit dem weiteren Drehgelenk derselben Querlenkerstrebe ist die Querlenkerstrebenlinie. Durch die Positionierung des Drehgelenks jeder Querlenkerstrebe an dem Radträger und die Positionierung des weiteren Drehgelenks jeder Querlenkerstrebe an der Karosserie kann der virtuelle Drehpunkt des Rades bedarfsgerecht festgelegt werden. Um den Lenkrollradius bei jedem Lenkwinkel so klein wie möglich zu halten, muss der virtuelle Drehpunkt bei jedem zu realisierenden Lenkwinkel so nah wie möglich an der Radmitte liegen. Diese einzelnen Faktoren haben Einfluss auf die Ausformung des langen Schenkels und des kurzen Schenkels jeder Querlenkerstrebe.

Die Ausformung jeder Querlenkerstrebe ist noch von weiteren Faktoren abhängig, welche miteinander im Verhältnis stehen. Dies kann zum Beispiel durch folgende Gleichung beschrieben werden: a ≤ b + c. Dabei ist a der horizontale Abstand der beiden radträgerseitigen Drehgelenke zueinander, wobei von einem Mittelpunkt des einen Drehgelenks zu dem Mittelpunkt des anderen Drehgelenks gemessen wird. b ist der horizontale Abstand des Mittelpunkts des Drehgelenks, das mit der betrachteten Querlenkerstrebe verbunden ist, zu einer Außenmantelfläche des Rades, wobei der Abstand von diesem Mittelpunkt zu der weiter von diesem Mittelpunkt entfernten Außenmantelfläche gemessen wird. Schließlich ist c die maximal mögliche Stärke der betrachteten Querlenkerstrebe, z. B. bei einer Querlenkerstrebe mit kreisförmigem Querschnitt der Durchmesser dieses kreisförmigen Querschnitts.

Nach einer weiteren Ausführungsform sind in einer Ausgangsposition die beiden Querlenkerstreben derart angeordnet, dass die beiden Querlenkerstreben achssymmetrisch zu einer Raddrehachse des Rades des Lenkersystems sind, wobei der konvexe Bereich der einen Querlenkerstrebe in Richtung des konvexen Bereichs der anderen Querlenkerstrebe orientiert ist. Beide Querlenkerstreben sind gleichförmig ausgeformt. Die Drehung der Querlenkerstreben erfolgt aus einer Ausgangsposition heraus. Diese Ausgangsposition ist diejenige Position, die die Querlenkerstreben in einer Konstruktionslage einnehmen, d. h. ohne einen eingestellten Lenkwinkel des Rades des Lenkersystems. Beide Querlenkerstreben sind achssymmetrisch zu der Raddrehachse des Rades bei einer Betrachtung der Querlenkeranordnung aus Richtung einer Fahrbahn. In dieser Ausgangsposition sind die beiden Querlenkerstreben so zueinander angeordnet, dass ihre konvexen Bereiche zueinander orientiert sind. Der virtuelle Drehpunkt des Rades liegt in der Ausgangsposition auf einem Schnittpunkt der verlängerten Querlenkerstrebenlinien, und auf Projektion der Raddrehachse des Rades. Diese Ausgangsposition korrespondiert mit einer Geradeausfahrt eines Fahrzeugs, das das Lenkersystem aufweist.

Nach einer weiteren Ausführungsform schwenkt bei einem Schwenken des Rades des Lenkersystems das Rad in Richtung des konkaven Bereichs einer der zwei Querlenkerstreben, wobei die andere der zwei Querlenkerstreben gleichzeitig mit ihrem konvexen Bereich in Richtung der Felge des Rades dreht. Die Drehung jeder Querlenkerstrebe erfolgt mittels der Drehgelenke und mittels der weiteren Drehgelenke.

Beispielsweise wird für das Rad ein Lenkwinkel von 90° in eine Richtung eingestellt. Diejenige Querlenkerstrebe, auf die das Rad zu schwenkt, d. h. in deren Richtung des Rad schwenkt, weicht dem Rad durch eine Drehbewegung aus, so dass das Rad in den konkaven Bereich dieser Querlenkerstrebe schwenkt. Hierbei kollidiert das Rad zu keinem Zeitpunkt mit dieser Querlenkerstrebe. Der konvexe Bereich derjenigen Querlenkerstrebe, auf die das Rad nicht zu schwenkt, d. h. von der sich das Rad wegbewegt, wird durch die Schwenkbewegung des Rades in die Felge des Rades gedreht. Der virtuelle Drehpunkt des Rades ist im Vergleich zur Ausgangsposition verschoben, d. h. die verlängerte Querlenkerstrebenlinien der Querlenkerstrebe, in dessen Richtung das Rad geschwenkt wurde, schneidet die unverlängerte Querlenkerstrebenlinie der anderen Querlenkerstrebe. Der virtuelle Drehpunkt liegt nicht mehr auf der Raddrehachse des Rades.

Eine Achsanordnung weist wenigstens ein Lenksystem, zwei Federbeine und zwei Lenkersysteme nach einer der bereits beschriebenen Ausführungen auf. Das Drehen einer der zwei Querlenkerstreben der Querlenkeranordnung wird mittels der Drehgelenke durch das Lenksystem eingeleitet. Hierbei handelt es sich um einen passiven Drehvorgang. Das passive Einleiten der Drehung der Querlenkerstreben ist hierbei derart zu verstehen, dass das Lenksystem allein durch ein Schwenken des Rades, wobei das Rad mit demselben Radträger verbunden ist wie die beiden Querlenkerstreben, die Drehung der Querlenkerstreben hervorruft. Das Schwenken des Rades ist also ein regulärer Lenkvorgang z. B. bei einer Kurvenfahrt. Das Lenksystem, das die Drehung einleitet ist ein handelsübliches Lenksystem, welches eine Lenkbewegung an die Räder weiterleitet. Die Achsanordnung kann beispielsweise eine Achsanordnung in Doppelquerlenkerausführung oder in McPherson-Ausführung sein.

Nach einer weiteren Ausführungsform der Achsanordnung weist eine der zwei Querlenkerstreben der Querlenkeranordnung eine Verbindungsstelle auf, mit welcher das Lenksystem der Achsanordnung verbunden ist, wobei das Lenksystem der Achsanordnung das Drehen einer der zwei Querlenkerstreben mittels der Drehgelenke initiiert. Die Verbindung zwischen der einen der zwei Querlenkerstreben und dem Lenksystem kann hierbei direkt sein, d. h. das Lenksystem ist direkt an der einen der zwei Querlenkerstreben gelagert. Die Verbindung zwischen der einen der zwei Querlenkerstreben und dem Lenksystem kann hierbei alternativ dazu über ein weiteres Bauelement erfolgen. Die Verbindungsstelle ist hierbei derart ausgelegt, dass sie für die durch das Lenksystem eingebrachten Kräfte stabil ist.

Nach einer weiteren Ausführungsform der Achsanordnung weist jedes Federbein einen Lenkaktor auf, welcher das Drehen einer der zwei Querlenkerstreben mittels der Drehgelenke initiiert. Der Lenkaktor ist hierbei direkt mit seinem entsprechendem Federbein verbunden, d. h. das Schwenken des Rades, mit dessen zugeordnetem Federbein der Lenkaktor verbunden ist, leitet gleichzeitig ein Drehen der beiden Querlenkerstreben ein, die mit demselben Radträger verbunden sind wie das zu schwenkende Rad. Die direkte Verbindung zwischen dem Federbein und dem Lenkaktor ist vorteilhaft, da somit ein Überschlagen oder Umklappen der Querlenkerstreben bei gewissen Lenkwinkeln vermieden werden kann.

Anhand der im Folgenden erläuterten Figuren werden verschiedene Ausführungsbeispiele und Details der Erfindung näher beschrieben. Es zeigen:
- Fig. 1: eine schematische Seitenansicht eines Ausschnitts aus einem Lenkersystem mit einer Querlenkeranordnung mit zwei bogenförmigen Querlenkerstreben in einer Ausgangsposition,
- Fig. 2: eine schematische Seitenansicht des Ausschnitts aus dem Lenkersystem mit der Querlenkeranordnung mit den zwei bogenförmigen Querlenkerstreben aus Fig. 1 mit einem geringen Lenkwinkel, und
- Fig. 3: eine schematische Seitenansicht des Ausschnitts aus dem Lenkersystem mit der Querlenkeranordnung mit den zwei bogenförmigen Querlenkerstreben aus Fig. 1 mit einem Lenkwinkel von 90°.

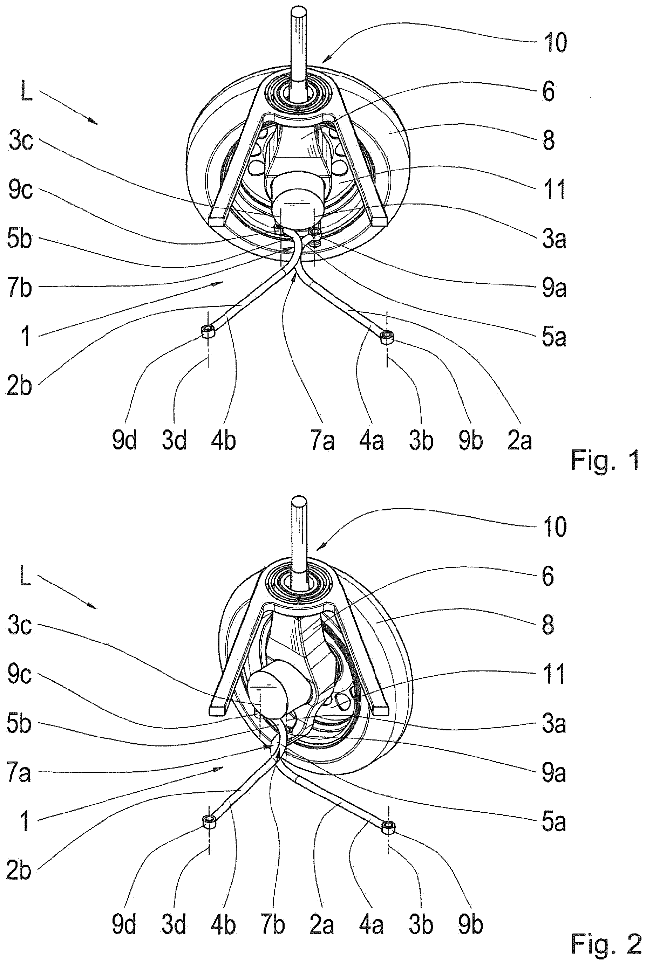

Fig. 1 zeigt eine schematische Seitenansicht eines Ausschnitts aus einem Lenkersystem L mit einer Querlenkeranordnung 1 mit zwei bogenförmigen Querlenkerstreben 2a, 2b in einer Ausgangsposition. Jede bogenförmige Querlenkerstrebe 2a, 2b weist einen radträgerseitigen Abschnitt 5a, 5b und einen karosserieseitigen Abschnitt 4a, 4b auf. Der radträgerseitige Abschnitt 5a einer ersten der zwei Querlenkerstreben 2a und der radträgerseitige Abschnitt 5b einer zweiten der zwei Querlenkerstreben 2b weisen jeweils ein Drehgelenk 9a, 9c auf. Der karosserieseitige Abschnitt 4a einer ersten der zwei Querlenkerstreben 2a und der karosserieseitige Abschnitt 4b einer zweiten der zwei Querlenkerstreben 2b weisen jeweils ein weiteres Drehgelenk 9b, 9d auf.

Durch den Mittelpunkt des Drehgelenks 9a der ersten der zwei Querlenkerstreben 2a verläuft senkrecht zu der ersten der zwei Querlenkerstreben 2a eine Rotationsachse 3a dieser Querlenkerstrebe 2a. Durch den Mittelpunkt des weiteren Drehgelenks 9b der ersten der zwei Querlenkerstreben 2a verläuft senkrecht zu der ersten der zwei Querlenkerstreben 2a eine weitere Rotationsachse 3b dieser Querlenkerstrebe 2a. Durch den Mittelpunkt des Drehgelenks 9c der zweiten der zwei Querlenkerstreben 2b verläuft senkrecht zu der zweiten der zwei Querlenkerstreben 2b eine Rotationsachse 3c dieser Querlenkerstrebe 2b. Durch den Mittelpunkt des weiteren Drehgelenks 9d der zweiten der zwei Querlenkerstreben 2b verläuft senkrecht zu der ersten der zwei Querlenkerstreben 2b eine weitere Rotationsachse 3d dieser Querlenkerstrebe 2b. Die erste Querlenkerstrebe 2a kann somit um ihre Drehachse 3a und um ihre weitere Drehachse 3b drehen. Die zweite Querlenkerstrebe 2b kann somit um ihre Drehachse 3c und ihre weitere Drehachse 3d drehen. Alle Rotationsachsen 3a, 3b, 3c, 3b sind somit senkrecht auf einer Ebene, die die beiden Querlenkerstreben 2a, 2b aufspannen und somit senkrecht zu einer Fahrbahn.

Die erste Querlenkerstrebe 2a wird von ihrem radträgerseitigen Abschnitt 5a zu einer Seite hin begrenzt und von ihrem karosserieseitigen Abschnitt 4a zu einer anderen Seite hin begrenzt. Die Strecke zwischen dem radträgerseitigen Abschnitt 5a und dem karosserieseitigen Abschnitt 4a der ersten Querlenkerstrebe 2a weist ein Extremum 7a auf. Die erste Querlenkerstrebe 2a ist bogenförmig. Die zweite Querlenkerstrebe 2b wird von ihrem radträgerseitigen Abschnitt 5b zu einer Seite hin begrenzt und von ihrem karosserieseitigen Abschnitt 4b zu einer anderen Seite hin begrenzt. Die Strecke zwischen dem radträgerseitigen Abschnitt 5b und dem karosserieseitigen Abschnitt 4b der zweiten Querlenkerstrebe 2b weist ein Extremum 7b auf. Die zweite Querlenkerstrebe 2b ist bogenförmig. Die Extrema 7a, 7b sind näher an einem Radträger 6 angeordnet als an den jeweiligen karosserieseitigen Abschnitten 4a, 4b. Dadurch ist die Bogenform nicht kreisbogenförmig. Beide Querlenkerstreben 2a, 2b sind somit gleichförmig ausgestaltet. Die Bogenform weist hierbei keine weiteren Sattelpunkte, Extrema auf.

Der Bereich der ersten Querlenkerstrebe 2a, der einerseits durch das Extremum 7a der ersten Querlenkerstrebe 2a und andererseits durch den radträgerseitigen Abschnitt 5a begrenzt ist, bildet einen kurzen Schenkel der ersten Querlenkerstrebe 2a. Der Bereich der ersten Querlenkerstrebe 2a, der einerseits durch das Extremum 7a der ersten Querlenkerstrebe 2a und andererseits durch den karosserieseitigen Abschnitt 4a begrenzt ist, bildet einen langen Schenkel der ersten Querlenkerstrebe 2a. Der Bereich der zweiten Querlenkerstrebe 2b, der einerseits durch das Extremum 7b der ersten Querlenkerstrebe 2b und andererseits durch den radträgerseitigen Abschnitt 5b begrenzt ist, bildet einen kurzen Schenkel der zweiten Querlenkerstrebe 2b. Der Bereich der zweiten Querlenkerstrebe 2b, der einerseits durch das Extremum 7b der zweiten Querlenkerstrebe 2b und andererseits durch den karosserieseitigen Abschnitt 4b begrenzt ist, bildet einen langen Schenkel der zweiten Querlenkerstrebe 2b.

Mittels des Drehgelenks 9a der ersten Querlenkerstrebe 2a ist die erste Querlenkerstrebe 2a mit dem Radträger 6 des Lenkersystems L drehbar verbunden. Mittels des Drehgelenks 9c der zweiten Querlenkerstrebe 2b ist die zweite Querlenkerstrebe 2b mit dem Radträger 6 des Lenkersystems L drehbar verbunden. Die erste Querlenkerstrebe 2a ist mit dem Radträger 6 nahe an dessen unterer Begrenzung, d. h. an demjenigen Bereich des Radträgers 6, der einer Fahrbahn am nächsten angeordnet ist, verbunden. Die zweite Querlenkerstrebe 2b ist mit dem Radträger 6 nahe einer Radmitte, d. h. nahe einer Raddrehachse eines Rades 8, welches eine Felge 11 aufweist, verbunden. Beide Querlenkerstreben 2a, 2b sind derart zueinander angeordnet, dass sie vertikal und horizontal zueinander beabstandet sind und einen aufgelösten Querlenker ausformen. Die erste Querlenkerstrebe 2a weist den gleichen Abstand zu einer Radmittelebene, welche senkrecht auf der Raddrehachse des Rades 8 und auf einer Fahrbahn steht, auf wie die zweite Querlenkerstrebe 2b. Die beiden Querlenkerstreben 2a, 2b sind achssymmetrisch zu der Raddrehachse des Rades 8 angeordnet. Der Radträger 6 ist mit dem Rad 8 des Lenkersystems L verbunden. Beide Querlenkerstreben 2a, 2b sind unterhalb einer Raddrehachse des Rades 8 angeordnet, d. h. unterhalb der Radmitte in Richtung der Fahrbahn.

Hier dargestellt ist eine Ausgangsposition der beiden Querlenkerstreben 2a, 2b. Dies heißt, dass der konvexe Bereich um das Extremum 7a der ersten Querlenkerstrebe 2a und der konvexe Bereich um das Extremum 7b der zweiten Querlenkerstrebe 2b einander zugewandt sind. Der Radträger 6 wird an einem der Fahrbahn entgegengesetzten Ende von einem Kardangelenk 10 begrenzt. Der Lenkwinkel des Rades 8 beträgt 0°, d. h. es ist eine Geradeausfahrt dargestellt.

Fig. 2 zeigt eine schematische Seitenansicht des Ausschnitts aus dem Lenkersystem L mit der Querlenkeranordnung 1 mit den zwei bogenförmigen Querlenkerstreben 2a, 2b aus Fig. 1 mit einem geringen Lenkwinkel. Das Rad 8 ist in Richtung der ersten Querlenkerstrebe 2a geschwenkt und von der zweiten Querlenkerstrebe 2b weg geschwenkt. Das Schwenken des Rades 8 erfolgt mittels eines Lenksystems, welches hier nicht dargestellt ist. Beide Querlenkerstreben 2a, 2b befinden sich nicht mehr in Ausgangsposition, sondern sind um ihre Rotationsachsen 3a, 3b, 3c, 3d gedreht. Die Drehung erfolgt derart, dass die erste Querlenkerstrebe 2a in ihrer Ebene verbleibt und dass die zweite Querlenkerstrebe 2b ebenfalls in ihrer Ebene verbleibt. Das Rad 8 dreht in den konkaven Bereich der ersten Querlenkerstrebe 2a hinein. Der konvexe Bereich der zweiten Querlenkerstrebe 2b dreht auf die Felge 11 des Rades 8 zu. Das Lenksystem ist hierbei das System, welches eine Lenkung eines Fahrzeugs, z. B. bei einer Kurvenfahrt, an die Räder des Fahrzeugs weiterleitet.

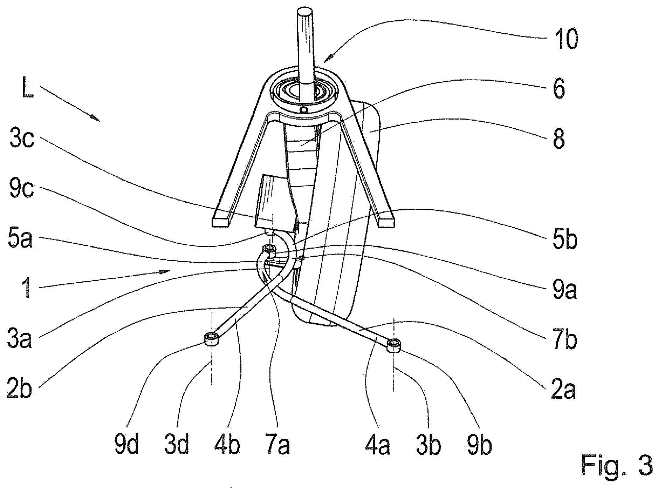

Fig. 3 zeigt eine schematische Seitenansicht des Ausschnitts aus dem Lenkersystem L mit der Querlenkeranordnung 1 mit den zwei bogenförmigen Querlenkerstreben 2a, 2b aus Fig. 1 mit einem Lenkwinkel von 90°. Das Rad 8 ist aus der Ausgangsposition heraus mittels des Lenksystems, welches hier nicht dargestellt ist, um 90° geschwenkt. Durch das Schwenken des Rades 8 werden beide Querlenkerstreben 2a, 2b um ihre Rotationsachsen 3a, 3b, 3c, 3d gedreht. Die erste Querlenkerstrebe 2a, auf welche sich das Rad 8 zubewegt, ist derart gedreht, dass der konkave Bereich der ersten Querlenkerstrebe 2a um das Rad 8 herumgeführt ist. Das Rad 8 ist in anderen Worten in diese Krümmung hineinbewegt. Der lange Schenkel mit dem karosserieseitige Abschnitt 4a der ersten Querlenkerstrebe 2a ist um das Rad 8 herumgeführt.

Die zweite Querlenkerstrebe 2b, von deren Richtung sich das Rad 8 wegbewegt, wird derart gedreht, dass deren konvexer Bereich sich in die Felge 11 des Rades 8 dreht. Durch die besondere Ausgestaltung der Bogenform der zweiten Querlenkerstrebe 2b passt der konvexe Bereich in die Felge 11 des Rades 8. Der lange Schenkel der zweiten Querlenkerstrebe 2b ist von dem Rad 8 weggeführt. Durch die beabstandete Anordnung der ersten Querlenkerstrebe 2a zu der zweiten Querlenkerstrebe 2b kommt es nicht zu einer Kollision der beiden Querlenkerstreben 2a, 2b miteinander. Durch die besondere Geometrie der beiden Querlenkerstreben 2a, 2b kommt es nicht zu einer Kollision einer oder beider Querlenkerstreben 2a, 2b mit dem Rad 8 oder der Felge 11 des Rades. Somit ist ein Lenkwinkel von wenigstens 90° realisiert.

Die hier dargestellten Ausführungsbeispiele sind nur beispielhaft gewählt. Beispielsweise können die Querlenkerstreben an einer anderen Position mit dem Radträger verbunden werden. Ebenfalls kann die Bogenform an die jeweilige Geometrie der in dem Lenkersystem genutzten Räder angepasst werden. Des Weiteren kann die erste Querlenkerstrebe auch vertikal näher an der Radmitte angeordnet sein als die zweite Querlenkerstrebe.

### Bezugszeichen

- 1: Querlenkeranordnung
- 2a: erste Querlenkerstrebe
- 2b: zweite Querlenkerstrebe
- 3a: Rotationsachse der ersten Querlenkerstrebe
- 3b: weitere Rotationsachse der ersten Querlenkerstrebe
- 3c: Rotationsachse der zweiten Querlenkerstrebe
- 3d: weitere Rotationsachse der zweiten Querlenkerstrebe
- 4a: karosserieseitiger Abschnitt der ersten Querlenkerstrebe
- 4b: karosserieseitiger Abschnitt der zweiten Querlenkerstrebe
- 5a: radträgerseitiger Abschnitt der ersten Querlenkerstrebe
- 5b: radträgerseitiger Abschnitt der zweiten Querlenkerstrebe
- 6: Radträger
- 7a: Extremum der ersten Querlenkerstrebe
- 7b: Extremum der zweiten Querlenkerstrebe
- 8: Rad
- 9a: Drehgelenk der ersten Querlenkerstrebe
- 9b: weiteres Drehgelenk der ersten Querlenkerstrebe
- 9c: Drehgelenk der zweiten Querlenkerstrebe
- 9d: weiteres Drehgelenk der zweiten Querlenkerstrebe
- 10: Kardangelenk
- 11: Felge
- L: Lenkersystem

## Patentansprüche

1. Lenkersystem (L) für eine Radaufhängung einer Achsanordnung eines Fahrzeugs mit einer Querlenkeranordnung (1), mit einem Radträger (6) und mit einem Rad (8), wobei die Querlenkeranordnung (1) zwei gleichförmig ausgeformte einfach bogenförmige Querlenkerstreben (2a, 2b) aufweist, von welchen jede einen radträgerseitigen Abschnitt (5a, 5b) und einen karosserieseitigen Abschnitt (4a, 4b) aufweist, wobei eine der zwei Querlenkerstreben (2a, 2b) näher an einer Raddrehachse des Rades (8) des Lenkersystems angeordnet ist als eine andere der zwei Querlenkerstreben (2a, 2b), wobei die Bogenform jeder Querlenkerstrebe (2a, 2b) ein Extremum (7a, 7b) aufweist, welches näher an dem radträgerseitigen Abschnitt (5a, 5b) angeordnet ist als an dem karosserieseitigen Abschnitt (4a, 4b), **dadurch gekennzeichnet, dass** jeder radträgerseitige Abschnitt (5a, 5b) ein Drehgelenk (9a, 9c) aufweist und jeder karosserieseitige Abschnitt (4a, 4b) ein weiteres Drehgelenk (9b, 9d) aufweist, und dass die Bogenform derart gestaltet ist, dass bei einem Drehen der einen der zwei Querlenkerstreben (2a, 2b) um wenigstens eine Rotationsachse (3a, 3b, 3c, 3d) ein konvexer Bereich dieser Querlenkerstrebe (2a, 2b) innerhalb einer Felge des Rades (8) anordenbar ist, welches mit einem selben Radträger (6) verbunden ist wie beide Querlenkerstreben (2a, 2b), und dass die Bogenform derart gestaltet ist, dass bei einem Drehen der anderen der zwei Querlenkerstreben (2a, 2b) um wenigstens eine Rotationsachse (3a, 3b, 3c, 3d) ein konkaver Bereich dieser Querlenkerstrebe (2a, 2b), um das Rad (8) herumführbar ist, welches mit einem selben Radträger (6) verbunden ist wie beide Querlenkerstreben (2a, 2b).

2. Lenkersystem (L) nach Anspruch 1, **dadurch gekennzeichnet, dass** jede Querlenkerstrebe (2a, 2b) ausgehend von ihrem jeweiligen Extremum (7a, 7b) einen kurzen Schenkel und einen langen Schenkel aufweist, wobei die Steigung des langen Schenkels geringer ist als die des kurzen Schenkels, und der kurze Schenkel sowohl durch den radträgerseitigen Abschnitt (5a, 5b) als auch durch das Extremum (7a, 7b) begrenzt wird, sowie der lange Schenkel sowohl durch den karosserieseitigen Abschnitt (4a, 4b) als auch durch das Extremum (7a, 7b) begrenzt wird.

3. Lenkersystem (L) nach einem der vorherigen Ansprüche, **dadurch gekennzeichnet, dass** in einer Ausgangsposition die beiden Querlenkerstreben (2a, 2b) derart angeordnet sind, dass die beiden Querlenkerstreben (2a, 2b) achssymmetrisch zu einer Raddrehachse des Rades (8) des Lenkersystems (L) sind, wobei der konvexe Bereich der einen Querlenkerstrebe (2a, 2b) in Richtung des konvexen Bereichs der anderen Querlenkerstrebe (2a, 2b) orientiert ist.

4. Lenkersystem (L) nach einem der vorherigen Ansprüche, **dadurch gekennzeichnet, dass** bei einem Schwenken des Rades (8) des Lenkersystems (L) das Rad (8) in Richtung des konkaven Bereichs einer der zwei Querlenkerstreben (2a, 2b) schwenkt, wobei die andere der zwei Querlenkerstreben (2a, 2b) gleichzeitig mit ihrem konvexen Bereich in Richtung der Felge des Rades (8) dreht.

5. Achsanordnung mit einem Lenksystem, zwei Federbeinen und zwei Lenkersystemen (L) nach einem der vorherigen Ansprüche, **dadurch gekennzeichnet, dass** das Drehen einer der zwei Querlenkerstreben (2a, 2b) der Querlenkeranordnung (1) mittels der Drehgelenke (9a, 9b, 9c, 9d) durch das Lenksystem eingeleitet wird.

6. Achsanordnung nach Anspruch 5, **dadurch gekennzeichnet, dass** eine der zwei Querlenkerstreben (2a, 2b) der Querlenkeranordnung (1) eine Verbindungsstelle aufweist, mit welcher das Lenksystem der Achsanordnung verbunden ist, wobei das Lenksystem der Achsanordnung das Drehen einer der zwei Querlenkerstreben (2a, 2b) mittels der Drehgelenke (9a, 9b, 9c, 9d) initiiert.

7. Achsanordnung nach Anspruch 5, **dadurch gekennzeichnet, dass** jedes Federbein einen Lenkaktor aufweist, welcher das Drehen einer der zwei Querlenkerstreben (2a, 2b) mittels der Drehgelenke (9a, 9b, 9c, 9d) initiiert.

## Claims

1. Control arm system (L) for a wheel suspension system of an axle arrangement of a vehicle having a transverse control arm arrangement (1), having a wheel support (6) and having a wheel (8), the transverse control arm arrangement (1) having two transverse control arm struts (2a, 2b) which are formed with an identical shape, are configured with a single curve, and of which each has a wheel support-side section (5a, 5b) and a vehicle body-side section (4a, 4b), one of the two transverse control arm struts (2a, 2b) being arranged closer to a wheel rotational axis of the wheel (8) of the control arm system than another one of the two transverse control arm struts (2a, 2b), the curved shape of each transverse control arm strut (2a, 2b) having an extremum (7a, 7b) which is arranged closer to the wheel support-side section (5a, 5b) than to the vehicle body-side section (4a, 4b), **characterized in that** each wheel support-side section (5a, 5b) has a rotary joint (9a, 9c), and each vehicle body-side section (4a, 4b) has a further rotary joint (9b, 9d), and **in that** the curved shape is designed in such a way that, in the case of a rotation of the one of the two transverse control arm struts (2a, 2b) about at least one rotational axis (3a, 3b, 3c, 3d), a convex region of the said transverse control arm strut (2a, 2b) can be arranged within a rim of the wheel (8) which is connected to one and the same wheel support (6) as the two transverse control arm struts (2a, 2b), and **in that** the curved shape is designed in such a way that, in the case of a rotation of the other one of the two transverse control arm struts (2a, 2b) about at least one rotational axis (3a, 3b, 3c, 3d), a concave region of the said transverse control arm strut (2a, 2b) can be guided around the wheel (8) which is connected to one and the same wheel support (6) as the two transverse control arm struts (2a, 2b).

2. Control arm system (L) according to Claim 1, **characterized in that**, starting from its respective extremum (7a, 7b), each transverse control arm strut (2a, 2b) has a short limb and a long limb, the slope of the long limb being smaller than that of the short limb, and the short limb being delimited both by way of the wheel support-side section (5a, 5b) and by way of the extremum (7a, 7b), and the long limb being delimited both by way of the vehicle body-side section (4a, 4b) and by way of the extremum (7a, 7b).

3. Control arm system (L) according to either of the preceding claims, **characterized in that**, in a starting position, the two transverse control arm struts (2a, 2b) are arranged in such a way that the two transverse control arm struts (2a, 2b) are axially symmetrical with respect to a wheel rotational axis of the wheel (8) of the control arm system (L), the convex region of the one transverse control arm strut (2a, 2b) being oriented in the direction of the convex region of the other transverse control arm strut (2a, 2b).

4. Control arm system (L) according to one of the preceding claims, **characterized in that**, in the case of pivoting of the wheel (8) of the control arm system (L), the wheel (8) pivots in the direction of the concave region of one of the two transverse control arm struts (2a, 2b), the other one of the two transverse control arm struts (2a, 2b) rotating at the same time with its convex region in the direction of the rim of the wheel (8).

5. Axle arrangement having a steering system, two suspension struts and two control arm systems (L) according to one of the preceding claims, **characterized in that** the rotating of one of the two transverse control arm struts (2a, 2b) of the transverse control arm arrangement (1) is initiated by way of the steering system by means of the rotary joints (9a, 9b, 9c, 9d).

6. Axle arrangement according to Claim 5, **characterized in that** one of the two transverse control arm struts (2a, 2b) of the transverse control arm arrangement (1) has a connecting point, to which the steering system of the axle arrangement is connected, the steering system of the axle arrangement initiating the rotating of one of the two transverse control arm struts (2a, 2b) by means of the rotary joints (9a, 9b, 9c, 9d).

7. Axle arrangement according to Claim 5, **characterized in that** each suspension strut has a steering actuator which initiates the rotating of one of the two transverse control arm struts (2a, 2b) by means of the rotary joints (9a, 9b, 9c, 9d).

## Revendications

1. Système de bras de suspension (L) pour une suspension de roue d'un ensemble essieu d'un véhicule, comprenant un ensemble bras transversal (1), un support de roue (6) et une roue (8), l'ensemble bras transversal (1) comprenant deux barres de bras transversal (2a, 2b) formées de façon identique et simplement arquées, parmi lesquelles chacune comprend une partie (5a, 5b) côté support de roue et une partie (4a, 4b) côté carrosserie, l'une des deux barres de bras transversal (2a, 2b) étant disposée plus près d'un axe de rotation de la roue (8) du système de bras de suspension qu'une autre des deux barres de bras transversal (2a, 2b), la forme arquée de chaque barre de bras transversal (2a, 2b) présentant un extremum (7a, 7b), lequel est disposé plus près de la partie (5a, 5b) côté support de roue que de la partie (4a, 4b) côté carrosserie, **caractérisé en ce que** chaque partie (5a, 5b) côté support de roue comprend une articulation rotative (9a, 9c) et chaque partie (4a, 4b) côté carrosserie comprend une autre articulation rotative (9b, 9d), et **en ce que** la forme arquée est configurée de telle sorte que lors d'une rotation de l'une des deux barres de bras transversal (2a, 2b) autour d'au moins un axe de rotation (3a, 3b, 3c, 3d), une région convexe de cette barre de bras transversal (2a, 2b) peut être disposée à l'intérieur d'une jante de la roue (8), laquelle roue est reliée à un même support de roue (6) que les deux barres de bras transversal (2a, 2b), et **en ce que** la forme arquée est configurée de telle sorte que, lors d'une rotation de l'autre des deux barres de bras transversal (2a, 2b) autour d'au moins un axe de rotation (3a, 3b, 3c, 3d), une région concave de cette barre de bras transversal (2a, 2b) peut être guidée autour de la roue (8), laquelle roue est reliée à un même support de roue (6) que les deux barres de bras transversal (2a, 2b).

2. Système de bras de suspension (L) selon la revendication 1, **caractérisé en ce que** chaque barre de bras transversal (2a, 2b) comprend, à partir de son extremum respectif (7a, 7b), une branche courte et une branche longue, la pente de la branche longue étant inférieure à celle de la branche courte, et la branche courte étant limitée à la fois par la partie (5a, 5b) côté support de roue et par l'extremum (7a, 7b), et la branche longue étant limitée à la fois par la partie (4a, 4b) côté carrosserie et par l'extremum (7a, 7b).

3. Système de bras de suspension (L) selon l'une quelconque des revendications précédentes, **caractérisé en ce que**, dans une position initiale, les deux barres de bras transversal (2a, 2b) sont disposées de telle sorte que les deux barres de bras transversal (2a, 2b) présentent une symétrie axiale par rapport à un axe de rotation de la roue (8) du système de bras de suspension (L), la région convexe de l'une des barres de bras transversal (2a, 2b) étant orientée en direction de la région convexe de l'autre barre de bras transversal (2a, 2b).

4. Système de bras de suspension (L) selon l'une quelconque des revendications précédentes, **caractérisé en ce que**, lors d'un pivotement de la roue (8) du système de bras de suspension (L), la roue (8) pivote en direction de la région concave de l'une des deux barres de bras transversal (2a, 2b), l'autre des deux barres de bras transversal (2a, 2b) tournant simultanément par sa région convexe en direction de la jante de la roue (8).

5. Ensemble essieu comprenant un système de direction, deux jambes de force et deux systèmes de bras de suspension (L) selon l'une quelconque des revendications précédentes, **caractérisé en ce que** la rotation de l'une des deux barres de bras transversal (2a, 2b) de l'ensemble bras transversal (1) est introduite par le système de direction au moyen des articulations rotatives (9a, 9b, 9c, 9d).

6. Ensemble essieu selon la revendication 5, **caractérisé en ce que** l'une des deux barres de bras transversal (2a, 2b) de l'ensemble bras transversal (1) comprend un point de liaison auquel le système de direction de l'ensemble essieu est relié, le système de direction de l'ensemble essieu initiant la rotation de l'une des deux barres de bras transversal (2a, 2b) au moyen des articulations rotatives (9a, 9b, 9c, 9d).

7. Ensemble essieu selon la revendication 5, **caractérisé en ce que** chaque jambe de force comprend un actionneur de direction, lequel initie la rotation de l'une des deux barres de bras transversal (2a, 2b) au moyen des articulations rotatives (9a, 9b, 9c, 9d).
